# EUROPÄISCHE PATENTSCHRIFT

(11) **EP 0 832 707 B1**
(45) Veröffentlichungstag und Bekanntmachung des Hinweises auf die Patenterteilung: **12.12.2001**
(21) Anmeldenummer: 97116114.6
(22) Anmeldetag: 17.09.1997
(51) Int. Cl.: B22D 41/32, C04B 35/01, B32B 18/00

(54) **Mehrschichtiger feuerfester Verschleisskörper**
Abradable multi-layer refractory article
Corps d'usure réfractaire à couches multiples

(30) Priorität: 18.09.1996 DE 19637960
(43) Veröffentlichungstag der Anmeldung: 01.04.1998
(73) Patentinhaber: DIDIER-WERKE AG, 65189 Wiesbaden (DE)
(72) Erfinder: Lührsen, Ernst, 65307 Bad Schwalbach (DE); Schuler, Andreas, 65232 Taunusstein (DE); Sheriff, Robert, 55218 Ingelheim (DE); Wiesel, Martin, Dr., 65189 Wiesbaden (DE)
(74) Vertreter: Becker, Thomas, Dr., Dipl.-Ing.

(56) Entgegenhaltungen:
- EP-A- 0 588 218
- WO-A-95/34395
- DATABASE WPI Section Ch, Week 8517 Derwent Publications Ltd., London, GB; Class L02, AN 85-102010 XP002100145 -& JP 60 046987 A (ASAHI GLASS CO LTD) , 14. März 1985

## Beschreibung

Die Erfindung betrifft einen mehrschichtigen, feuerfesten Verschleißkörper mit einer, einem unmittelbaren thermischen, mechanischen und/oder metallurgischen Angriff ausgesetzten Verschleißschicht und mindestens einer weiteren Schicht aus einem keramischen Werkstoff mit unterschiedlichen physikalischen Eigenschaften.

Derartige Verschleißkörper in Form feuerfester keramischer Schieberplatten für Schieberverschlüsse an metallurgischen Gefäßen sind seit langem bekannt. Sie werden ständig weiterverbessert. Besondere Problembereiche sind vor allem die Gleit-Oberflächen sowie der Durchlaß für die Metallschmelze.

Es hat deshalb an Versuchen nicht gefehlt, diese Problemzonen hinsichtlich ihrer thermischen, mechanischen und metallurgischen (chemischen) Widerstandsfähigkeit zu verbessern.

In der DE-OS 1 935 424 wird eine Schieberplatte auf Basis aluminiumoxidreicher Werkstoffe mit einer Porosität von etwa 19 % vorgeschlagen. Zur Erhöhung der Wärmespeicherung in der Schieberplatte wird die Schieberplatte in einen feuerfesten Tragkörper aus einem hochporösen Feuerfestmaterial (50 bis 60 %) eingelegt, der als Isoliermantel wirkt.

Durch die Erhöhung der Wärmespeicherung soll die Gefahr des Einfrierens von Metallschmelze in diesem Bereich vermindert werden.

Einen ähnlichen Aufbau mit einer Schieberplatte, die in einen Tragkörper eingelegt ist, beschreibt die deutsche Patentschrift 1 937 742. Der Einsatz wird in den Tragkörper eingemörtelt oder eingekittet.

In dem 1975 publizierten deutschen Gebrauchsmuster 75 00 855 wird eine weitere Ausführungsform einer mehrteiligen Schieberplatte offenbart. Die Abschnitte, entlang der die Schieberplatte gleitet beziehungsweise die Abschnitte, an denen die Metallschmelze vorbeiströmt, sind aus hochwertigen Materialien gefertigt. Dahinter ist ein Isolierkörper angeordnet. Die einzelnen Abschnitte werden miteinander vermörtelt.

In allen Fällen geht der Stand der Technik von einer mehrteiligen Schieberplatte aus, wobei die einzelnen Abschnitte getrennt hergestellt und anschließend miteinander vermörtelt werden.

Eine Weiterbildung dieses Standes der Technik beschreibt die DE 27 19 105 A1. Ein oxidkeramischer, hochwertiger, dichter keramischer Einsatz wird in-situ in eine Feuerbeton-Matrix eingeformt. Um den unterschiedlichen Wärmeausdehnungskoeffizienten des dichten Verschleißeinsatzes und des Feuerbetons Rechnung zu tragen, wird vorgeschlagen, den Einsatz mit einer elastischen Schicht zu umgeben. Gegenüber dem Stand der Technik zum damaligen Zeitpunkt besteht der Vorteil der Lösung gemäß DE 27 19 105 A1 darin, daß ein Fertigungsschritt entfällt, da bei der Herstellung des Basiskörpers der verschleißfeste Einsatz unmittelbar eingeformt wird. Der Hinweis auf die elastische Zwischenschicht zeigt jedoch, daß aufgrund der unterschiedlichen Materialien erhebliche Probleme bei dieser Technologie entstehen, die bis heute nur unzureichend gelöst sind.

Die W0 95/34395 beschreibt einen aus zwei kohlenstoffhaltigen Schichten aufgebauten Verschleißkörper, wobei eine Schicht einem metallurgischen (chemischen) Angriff ausgesetzt ist. Diese Schicht ist durch Oxidation gasundurchlässig gemacht worden. Beide Schichten werden bei der Herstellung gemeinsam verpreßt.

Die Erfindung berücksichtigt zunächst die richtigen Hinweise im Stand der Technik, daß Funktionalprodukte der genannten Art (einschließlich Düsen, Ausgüssen, Stopfen etc.) in bestimmten Bereichen besonderen thermischen, mechanischen und metallurgischen Angriffen ausgesetzt sind, die entsprechend optimiert werden müssen, wohingegen die dahinterliegenden Abschnitte aus minderwertigeren keramischen Qualitäten und Sorten bestehen können.

Die Erfindung entwickelt diesen Grundgedanken nun dahingehend weiter, indem die Schichten beziehungsweise einzelne Schichten nicht mehr vorgefertigt und später konfektioniert werden; vielmehr läßt sich die Erfindung von dem Gedanken leiten, die Schichten in einem gemeinsamen Formgebungsverfahren in-situ zu einem Verbundkörper zu vereinigen, und zwar unter Aufrechterhaltung der unterschiedlichen Werkstoffeigenschaften innerhalb der einzelnen Schichten.

Dieser Gedanke wird dahingehend spezifiziert, daß für die Werkstoffe sämtlicher Schichten keramische Massen mit einem Kohlenstoff-Gehalt eingesetzt werden, um so nach der gemeinsamen Formgebung, beispielsweise durch Verpressen, sowie anschließender thermischer Behandlung eine durchgehende Kohlenstoffbindung auszubilden, die die einzelnen Schichten untereinander zu einem dann quasi monolithischen Körper vereinigt.

In Vorversuchen wurde festgestellt, daß andere Bindungsarten, wie die keramische Bindung, die beschriebene Verfahrenstechnik nicht ermöglichen.

Insoweit besteht ein wichtiger Teil des Erfindungsgedankens und überraschender Effekt darin, daß feuerfeste keramische Massen mit völlig unterschiedlichen physikalischen Eigenschaften, beispielsweise völlig unterschiedlichen Porositätswerten (Rohdichten) in einem gemeinsamen Formgebungsverfahren miteinander verpreßt werden können, wenn C-haltige Massen eingesetzt werden.

Die Erfindung betrifft danach in ihrer allgemeinsten Ausführungsform einen mehrschichtigen feuerfesten Verschleißkörper mit den Merkmalen des Anspruches 1.

Während der Begriff Verschleißkörper alle Arten von feuerfesten keramischen Formteilen umfaßt, die einem thermischen, mechanischen und/oder metallurgischen (chemischen) Angriff und damit Verschleiß ausgesetzt sind, wird der Begriff "quasi monolithischer Körper" dahingehend definiert, daß der Körper keine durchgehend isotropen Eigenschaften aufweisen muß, jedoch eine die werkstoffmäßig unterschiedlichen Schichten verbindende Matrix ausbildet, also die im Stand der Technik notwendigen Verbindungstechniken durch Kleben, Kitten oder Mörteln überflüssig macht.

Mit der Erfindung sind eine Vielzahl von Vorteilen erreichbar:
- Lediglich für die Verschleißzonen werden hochwertige Feuerfestqualitäten und -sorten benötigt. Die weiteren Zonen können aus minderwertigeren und damit auch preiswerteren Werkstoffen, nämlich einem wiederaufbereiteten, gekörnten Recyclingmaterial hergestellt werden. Hierdurch lassen sich die Materialkosten deutlich verringern.
- Die Verschleißschicht kann relativ dünn ausgebildet werden. Obwohl sie eine hohe Dichte besitzen soll, führt die geringe Dicke dazu, daß beim Preßvorgang keine nennenswerten Entgasungsprobleme auftreten.
- Für die verschiedenen Schichten können gleiche Werkstoffsorten verwendet werden, jedoch unterschiedliche Qualitäten. So ist es möglich, die Verschleißschicht aus einem hochwertigen, aluminiumoxidreichen, kohlenstoffgebundenen Material herzustellen und die weitere Schicht (die weiteren Schichten) zumindest anteilig aus einem analogen Werkstoff, jedoch als aufbereitetes, gekörntes Recyclingmaterial, einzusetzen.
- Die Temperaturwechselbeständigkeit des Gesamtkörpers wird verbessert.
- Im Fall einer Tränkung der Platten mit infiltrationshemmenden Suspensionen, insbesondere Pech oder Teer, wird eine vollständige Durchtränkung der (relativ dichten) Verschleißschicht ermöglicht, da die infiltrationshemmende Suspension (Flüssigkeit) über die (relativ poröse) benachbarte Schicht - quasi von hinten - angesaugt werden kann.
- Die Herstellungskosten lassen sich reduzieren, da nur noch ein einziger Verfahrensschritt (gemeine Verpressung) notwendig ist.
- Die Erfindung läßt sich an ungebrannten und gebrannten Formteilen realisieren.
- Durch die Auswahl (mineralogisch/chemisch) gleicher oder ähnlicher Werkstoffe für die Schichten lassen sich die Wärmeausdehnungskoeffizienten anpassen.

Nachstehend werden verschiedene Ausführungsformen der Erfindung beschrieben:

So kann die Verschleißschicht eine offene Porosität von maximal 10 - 15 % und die benachbarte Schicht eine offene Porosität von mehr als 15 % aufweisen (jeweils vor einer etwaigen Tränkung mit infiltrationshemmenden Stoffen).

Während die Verschleißschicht eine Rohdichte von minimal 3,0 bis 3,2 g/cm³ aufweisen kann, wird in einer Ausführungsform die Rohdichte der benachbarten Schicht mit maximal 2,6 bis 2,9 g/cm³ angegeben (ebenfalls vor Tränkung).

Hinsichtlich der konkreten Werkstoffauswahl unterliegt die Erfindung keinen Beschränkungen. Es können sowohl basische wie nicht basische Materialien Anwendung finden. In jedem Fall müssen für die Verschleißschicht und die ihr benachbarte Schicht keramische Massen mit Kohlenstoffbindung eingesetzt werden.

Der beschriebene Mehrschichtaufbau schafft aber auch in ganz anderer Hinsicht entscheidende Vorteile. Um die infiltrationshemmenden Eigenschaften (insbesondere gegenüber einer metallurgischen Schlacke) zu verbessern und damit die Haltbarkeit zu erhöhen, ist es bekannt, in Verschleißteile wie Schieberplatten infiltrationshemmende Stoffe, wie Teer oder Pech, zu infiltrieren. Dabei wird die infiltrationshemmende Suspension in das offene Porenvolumen, meist unter Vakuum, gesaugt. Die einerseits angestrebte hohe Dichte stellt bei dieser Nachbehandlung jedoch insoweit ein Problem dar, als die geringe und feine offene Porosität auch bei einem entsprechend hohen Vakuum nur eine relativ geringe Penetration (Eindringtiefe) des Behandlungsmediums erlaubt. Die Folge ist, daß eine hochwertige (relativ dichte) Schieberplatte häufig "im Kern" (im Inneren) nicht imprägniert werden kann.

Diesen Nachteil überwindet die erfindungsgemäße Mehrschichtplatte dadurch, indem die relativ dichte Verschleißschicht deutlich geringer als im Stand der Technik ausgeführt werden kann. Die poröse benachbarte Schicht schafft aufgrund ihres erhöhten und gröberen Porenvolumens vor allem die Möglichkeit, die Verschleißschicht auch rückseitig über die poröse benachbarte Schicht zu infiltrieren. Beide Merkmale zusammen ermöglichen eine vollständige Durchtränkung der Verschleißschicht (und der benachbarten Schicht), wodurch die infiltrationshemmenden Eigenschaften der Platte und damit ihre Lebensdauer zusätzlich erhöht werden können.

Dieses Ziel läßt sich selbst dann erreichen, wenn die Verschleißschicht nur die Hälfte bis ein Fünftel der Gesamtdicke des Verschleißteils ausmacht.

Grundsätzlich lassen sich die Schichten miteinander vergießen. Bevorzugt ist aber selbstverständlich das gemeinsame Verpressen, wobei die unterschiedlichen Materialien nacheinander in den Formkasten eingefüllt und anschließend gemeinsam druckbelastet werden.

Die weitere Behandlung erfolgt nach den Vorgaben im Stand der Technik. Dies gilt sowohl für eine etwaige Imprägnierung wie eine anschließende thermische Behandlung.

## Patentansprüche

1. Mehrschichtiger feuerfester Verschleißkörper, insbesondere Schieberplatte, mit einer, einem thermischen, mechanischen und metallurgischen Angriff ausgesetzten Verschleißschicht und mindestens einer weiteren Schicht, die bis zu 100 Gew.-% des keramischen Werkstoffes der Verschleißschicht, jedoch in Form eines wiederaufbereiteten, gekörnten Recycling-materials, neben einem für eine Kohlenstoffbindung notwendigen Kohlenstoffanteil, aufweist, wobei die Schichten durch gemeinsame Formgebung und eine durchlaufende Kohlenstoffbindung zu einem quasi monolithischen Körper vereinigt sind.

2. Verschleißkörper nach Anspruch 1, bei dem die Verschleißschicht eine geringere offene Porosität als die benachbarte Schicht aufweist.

3. Verschleißkörper nach Anspruch 2, bei dem die Verschleißschicht eine offene Porosität von maximal 15 Vol.-% und die benachbarte Schicht eine offene Porosität von mehr als 15 Vol.-% aufweist,

4. Verschleißköprer nach Anspruch 2, bei dem die Verschleißschicht eine offene Porosität von maximal 12 Vol.-% und die benachbarte Schicht eine offene Porosität von minimal 16 Vol.-% aufweist.

5. Verschleißkörper nach Anspruch 1, bei dem die Verschleißschicht eine Rohdichte von minimal 3,0 g/cm³ und die benachbarte Schicht eine Rohdichte von maximal 2,9 g/cm³ aufweist.

6. Verschleißkörper nach Anspruch 1, bei dem die Verschleißschicht aus einem Al₂O₃-reichen, kohlenstoffgebundenen Werkstoff besteht.

7. Verschleißkörper nach Anspruch 2, bei dem die offene Porosität der Verschleißschicht und der benachbarten Schicht so eingestellt sind, daß die Verschleißschicht über ihre gesamte Stärke mit einer infiltrationshemmenden Suspension tränkbar ist.

8. Verschleißkörper nach Anspruch 1, bei dem das Dickenverhältnis der Verschleißschicht zur benachbarten Schicht zwischen 1:2 bis 1:5 beträgt.

9. Verschleißkörper nach Anspruch 1, bei dem die Schichten durch gemeinsames Verpressen zu einem quasi monolithischen Körper vereinigt sind.

## Claims

1. A multi-layer refractory wear body, in particular a sliding plate, having a wear layer being exposed to a thermal, mechanical and metallurgical attack, and at least one further layer comprising up to 100 % by weight of the ceramic material of said wear layer but in the form of a processed, granulated recycling material, besides a carbon content necessary for a carbon bond, wherein the layers are combined to a quasi monolithic body by a common moulding and a continuous carbon bond.

2. The wear body according to claim 1, wherein the wear layer has a lower open porosity than the adjacent layer.

3. The wear body according to claim 1, wherein the wear layer has an open porosity of not more than 15% by vol and the adjacent layer has an open porosity of more than 15% by vol.

4. The wear body according to claim 1, wherein the wear layer has an open porosity of not more than 12% by vol. and the adjacent layer has an open porosity of at least 16% by vol.

5. The wear body according to claim 1, wherein the wear layer has a bulk density of at least 3,0 g/cm³ and the adjacent layer has a bulk density of not more than 2,9 g/cm³.

6. The wear body according to claim 1, wherein the wear layer is made of an Al₂O₃-rich, carbon bonded material.

7. The wear body according to claim 2, wherein the open porosity of the wear layer and the adjacent layer are set in such a way that the wear layer can be impregnated with an infiltration inhibiting suspension over its whole thickness.

8. The wear body according to claim 1, wherein the ratio of thickness of the wear layer to the adjacent layer is from 1:2 to 1:5.

9. The wear body according to claim 1, wherein the layers are combined to a quasi-monolithic body by common pressing.

## Revendications

1. Corps d'usure réfractaire à couches multiples, notamment plaque mobile, doté d'une couche d'usure exposée à une action thermique, mécanique et métallurgique et d'au moins une autre couche présentant jusqu'à 100 % en poids du matériau céramique de la couche d'usure, mais sous forme d'une matière recyclable granulée retraitée, en plus d'un ingrédient carbone nécessaire à une liaison carbone, les couches étant réunies en un corps quasiment monolithique par formage commun et liaison carbone continue.

2. Corps d'usure selon la revendication 1, dans lequel la couche d'usure présente une porosité ouverte plus faible que celle de la couche contiguë.

3. Corps d'usure selon la revendication 2, dans lequel la couche d'usure présente une porosité ouverte d'au maximum 15 % en volume et la couche contiguë une porosité ouverte supérieure à 15 % en volume.

4. Corps d'usure selon la revendication 2, dans lequel la couche d'usure présente une porosité ouverte d'au maximum 12 % en volume et la couche contiguë une porosité ouverte d'au minimum 16 % en volume.

5. Corps d'usure selon la revendication 2, dans lequel la couche d'usure présente une densité brute d'au minimum 3,0 g/cm³ et la couche contiguë une densité brute d'au maximum 2,9 g/cm³.

6. Corps d'usure selon la revendication 1, dans lequel la couche d'usure se compose d'une matière riche en Al₂O₃ liée par du carbone.

7. Corps d'usure selon la revendication 2, dans lequel la porosité ouverte de la couche d'usure et de la couche contiguë sont réglées de manière à ce que la couche d'usure soit imprégnable d'une suspension inhibitrice d'infiltration dans toute son épaisseur.

8. Corps d'usure selon la revendication 1, dans lequel le rapport de l'épaisseur de la couche d'usure à la couche contiguë est de 1 : 2 à 1 : 5.

9. Corps d'usure selon la revendication 1, dans lequel les couches sont réunies en un corps quasiment monolithique par pressage commun.
